# EUROPEAN PATENT SPECIFICATION

(11) **EP 3 406 439 B1**
(45) Date of publication and mention of the grant of the patent: **30.03.2022**
(21) Application number: 17741536.1
(22) Date of filing: 20.01.2017
(51) Int. Cl.: B32B 27/00, B32B 27/30, B32B 27/32, E04B 1/94, B32B 5/02, B32B 27/12, B32B 27/08, B32B 27/18, B32B 27/10, B32B 21/08, B32B 15/08

(54) **REFRACTORY MULTILAYER SHEET**
FEUERFESTE MEHRSCHICHTFOLIE
FEUILLE MULTICOUCHE RÉFRACTAIRE

(30) Priority: 21.01.2016 JP 2016009514
(43) Date of publication of application: 28.11.2018
(73) Proprietor: Sekisui Chemical Co., Ltd., Osaka-shi, Osaka 530-8565 (JP)
(72) Inventor: UEDA, Akira, Tokyo 105-8450 (JP); SHIMAMOTO, Michio, Hasuda-shi Saitama 349-0198 (JP); YANO, Hideaki, Hasuda-shi Saitama 349-0198 (JP)
(74) Representative: Ter Meer Steinmeister & Partner
(86) International application number: PCT/JP2017/001939
(87) International publication number: WO 2017/126659

(56) References cited:
- EP-A1- 2 664 457
- EP-A1- 2 919 986
- JP-A- H11 270 019
- JP-A- H11 270 019
- JP-A- 2003 239 424
- JP-A- 2007 138 403
- JP-A- 2008 208 625
- JP-A- 2009 215 721
- JP-A- 2015 129 436

## Description

### Technical Field

The present invention relates to a fire-resistant multilayer sheet.

### Background Art

Resin materials with fireproof performance are required in the field of building materials. As such materials, thermally expandable materials comprising a thermally expandable resin composition containing a binder resin and a thermally expandable graphite are used.

When used as a member of a door etc., the thermally expandable material could be attached to a visible portion. In this case, in order to improve the designability, the thermally expandable material is coated with a coating composition to make the appearance color of the thermally expandable material consistent with the color of the other door members or the like.

When the thermally expandable material is coated with a coating composition, if the coating composition is applied directly, the solvent would be brought into direct contact with the resin, resulting in deterioration. In a known fire-resistant multilayer sheet 101, this problem was solved by laminating a substrate 103 on a thermally expandable material 102, and applying a coating composition to the substrate 103 to form a coating layer 104, as shown in Fig. 3. For example, Patent Literature (PTL) 1 discloses a decorative fire-resistant coating sheet having a surface decorative layer on the surface of a thermally expansible fire-resistant coating material body. JP H11 270019 A relates to a covering sheet for fire resistance, comprising resin films (b) having thickness of 5-300 µm and nonwoven fabrics having basis weight of 10-200 g/m<2> that are laminated on at least one surface of a fire-resistive expansion sheet (a) having thickness of 0.3-5 mm.
EP 2 664 457 A1 relates to thermal protective material comprising a laminate comprising a flame-resistant laminate comprising a thermally stable textile, a thermally expandable material and a convective barrier.
EP 2 919 986 A1 relates to a laminate comprising a base layer, a thermoplastic resin layer and a thermally expandable resin composition.

### Citation List

### Patent Literature

PTL 1: JPH11-293808A

### Summary of Invention

### Technical Problem

To avoid delamination between the substrate 103 and the thermally expandable material 102, the substrate 103 for lamination is usually embossed to give unevenness 103a so as to achieve an anchor effect. However, when the embossed substrate 103 is coated with a coating composition, the coating becomes uneven due to the unevenness 103a.

Further, when the substrate 103 is embossed, minute voids may be formed, and liquid components contained in the expandable material may reach the coating surface through the void portions, possibly causing color unevenness.

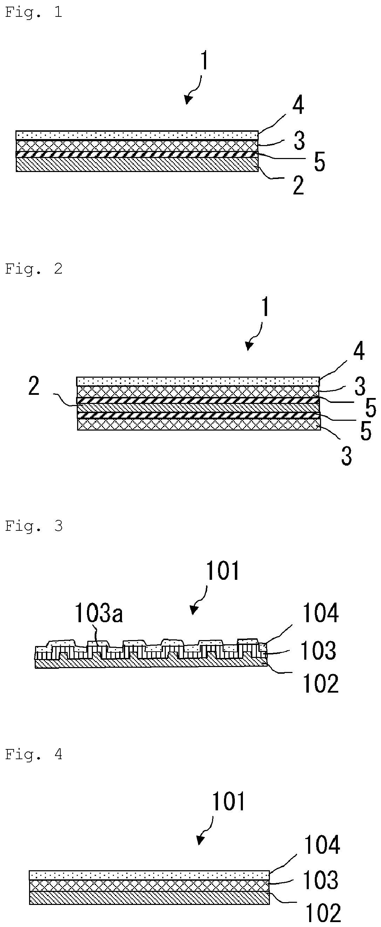

To solve the above problems, as shown in Fig. 4, a flat substrate 103 that is not embossed should be used as the substrate 103 of the fire-resistant multilayer sheet 101. In this case, however, there is no anchor effect between the substrate 103 and the thermally expandable material 102, and delamination is likely to occur at the contact surface between the substrate 103 and the thermally expandable material 102.

An object of the present invention is to provide a fire-resistant multilayer sheet with reduced coating unevenness, and with excellent adhesion between a thermally expandable material and a substrate.

### Solution to Problem

The present inventors found that the provision of an intervening layer between a thermally expandable material and a substrate can achieve the above object.

More specifically, the present invention is as defined in claim 1. Preferred embodiments are defined by the dependent claims.

### Advantageous Effects of Invention

The present invention achieves improved appearance of the surface of a fire-resistant multilayer sheet, and excellent adhesion between layers, thus achieving excellent aesthetic appearance, as well as fire resistance, of final products or members to which the fire-resistant multilayer sheet is attached.

### Brief Description of Drawings

Fig. 1 is a schematic cross-sectional view of a fire-resistant multilayer sheet according to one embodiment of the present invention.
Fig. 2 is a schematic cross-sectional view of a fire-resistant multilayer sheet according to another embodiment of the present invention.
Fig. 3 is a schematic cross-sectional view of a fire-resistant multilayer sheet of conventional art.
Fig. 4 is a schematic cross-sectional view of a fire-resistant multilayer sheet of conventional art.

### Description of Embodiments

The following describes a fire-resistant multilayer sheet according to the present invention with reference to Fig. 1.

Referring to Fig. 1, a fire-resistant multilayer sheet 1 according to one embodiment of the present invention comprises a thermally expandable material 2, a substrate 3 laminated with the thermally expandable material 2, a coating layer 4 laminated on the substrate 3, and an intervening layer 5 containing a thermoplastic resin disposed between the thermally expandable material 2 and the substrates 3.

### Thermally Expandable Material

The thermally expandable material 2 serves as a thermally expandable sheet, and is composed of a thermally expandable resin composition containing an epoxy resin and a thermally expandable graphite. The thickness of the thermally expandable material 2 is not particularly limited, and is, for example, 0.1 to 6 mm.

The thermally expandable resin composition contains an epoxy resin and a thermally expandable graphite. The thermally expandable material 2 can be obtained by kneading each component of the thermally expandable resin composition in accordance with a known molding method using a known device, such as a single-screw extruder, a twin-screw extruder, a Banbury mixer, a kneader mixer, a kneading roll, a Raikai mixer, or a planetary stirrer. In terms of improving the fireproof performance by increasing the fire resistance of the resin itself, an epoxy resin is used.

The thermally expandable graphite is a conventionally known substance that is expanded upon heating. The thermally expandable graphite is a graphite intercalation compound formed by treating a powder, such as natural flake graphite, pyrolytic graphite, or kish graphite, with an inorganic acid, such as concentrated sulfuric acid, nitric acid, or selenic acid; and with a strong oxidizing agent, such as concentrated nitric acid, perchloric acid, perchlorate, permanganate, dichromate, or hydrogen peroxide. The thermally expandable graphite is a kind of crystalline compound that retains the layered structure of the carbon.

The thermally expandable graphite obtained by acid treatment as above may be further neutralized with ammonia, an aliphatic lower amine, an alkali metal compound, an alkaline earth metal compound, or the like. The grain size of the thermally expandable graphite is preferably in the range of 20 to 200 mesh. When the grain size is 200 mesh or smaller, the degree of expansion of the graphite is sufficient to obtain an expandable heat insulating layer. When the grain size is 20 mesh or greater, the dispersibility upon mixing with a resin becomes desirable, thereby ensuring desirable properties. Examples of commercially available products of thermally expandable graphite include "GREP-EG" produced by Tosoh Corporation, "GRAFGUARD" produced by GRAFTECH, and the like.

The thermally expandable resin composition further contains an inorganic filler.

When an expandable heat insulating layer is formed, the inorganic filler contained therein increases the heat capacity and suppresses the heat transfer, and also functions as an aggregate, thereby improving the strength of the expandable heat insulating layer. Examples of inorganic fillers include, but are not particularly limited to, metal oxides, such as alumina, zinc oxide, titanium oxide, calcium oxide, magnesium oxide, iron oxide, tin oxide, antimony oxide, and ferrites; hydrated inorganic substances, such as calcium hydroxide, magnesium hydroxide, aluminum hydroxide, and hydrotalcite; metal carbonates, such as basic magnesium carbonate, calcium carbonate, magnesium carbonate, zinc carbonate, strontium carbonate, and barium carbonate; and the like.

In addition to the above, examples of inorganic fillers also include calcium salts, such as calcium sulfate, gypsum fiber, and calcium silicate; silica, diatomaceous earth, dawsonite, barium sulfate, talc, clay, mica, montmorillonite, bentonite, activated clay, sepiolite, imogolite, sericite, glass fiber, glass bead, silica balloon, aluminum nitride, boron nitride, silicon nitride, carbon black, graphite, carbon fiber, carbon balloon, charcoal powder, various types of metal powder, potassium titanate, magnesium sulfate, lead zirconate titanate, zinc stearate, calcium stearate, aluminum borate, molybdenum sulfide, silicon carbide, stainless steel fiber, zinc borate, various types of magnetic powder, slag fiber, fly ash, dehydrated sludge, and the like. These inorganic fillers may be used singly, or in a combination of two or more.

The particle size of the inorganic filler is preferably 0.5 µm to 100 µm, and more preferably 1 µm to 50 µm. When a small amount of an inorganic filler is added, the dispersibility thereof significantly influences the performance; therefore, the inorganic filler preferably has a small particle size. However, a particle size of 0.5 µm or more ensures desirable dispersibility. When a larger amount of an inorganic filler is added, the viscosity of the thermally expandable resin composition increases more, thereby decreasing formability. However, since the viscosity of the thermally expandable resin composition can be decreased by increasing the inorganic filler particle size, the inorganic filler preferably has a large particle size. However, a particle size of 100 µm or less is preferable in terms of surface properties of the molded product and mechanical physical properties of the thermally expandable resin composition.

Among these inorganic fillers, examples of aluminum hydroxides include "HIGILITE H-31" having a particle size of 18 µm (Showa Denko) and "B-325" having a particle size of 25 µm (Alcoa); and examples of calcium carbonates include "WHITON SB (red)" having a particle size of 1.8 µm (Bihoku Funka Kogyo), "BF 300" having a particle size of 8 µm (Bihoku Funka Kogyo), and the like.

Further, the thermally expandable resin composition that constitutes the thermally expandable fire-resistant material may include a phosphorus compound in addition to the above components so as to increase the strength of the expandable heat insulating layer and improve the fireproof performance. Examples of the phosphorus compound include, but are not particularly limited to, red phosphorus; various types of phosphoric esters such as triphenyl phosphate, tricresyl phosphate, trixylenyl phosphate, cresyl diphenyl phosphate, and xylenyl diphenyl phosphate; metal phosphates such as sodium phosphate, potassium phosphate, and magnesium phosphate; ammonium polyphosphates; the compounds represented by the following formula (1); and the like. Of these, in view of fireproof performance, the phosphorus compound is preferably red phosphorus, an ammonium polyphosphate, or a compound represented by the following formula (1); and, in terms of the performance, safety, cost, and the like, more preferably an ammonium polyphosphate.

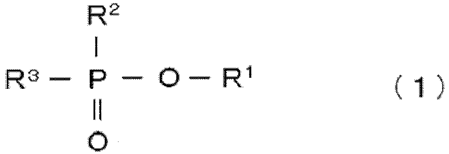

In formula (1), R¹ and R³ represent hydrogen, linear or branched C₁₋₁₆ alkyl, or C₆₋₁₆ aryl. R² represents hydroxy, linear or branched C₁₋₁₆ alkyl, linear or branched C₁₋₁₆ alkoxyl, C₆₋₁₆ aryl, or C₆₋₁₆ aryloxy.

Commercially available red phosphorus may be used as the red phosphorus. In view of moisture resistance and safety, such as no spontaneous ignition upon kneading, red phosphorus particles having resin-coated surfaces and the like are preferably used. Examples of ammonium polyphosphates include, but are not particularly limited to, ammonium polyphosphate, melamine-modified ammonium polyphosphate, and the like. In view of handleability, it is preferable to use ammonium polyphosphate. Examples of commercially available ammonium polyphosphates include "AP 422" and "AP 462" (Clariant), "FR CROS 484" and "FR CROS 487" (Budenheim Ibérica), and the like.

Examples of the compounds represented by formula (1) include, but are not particularly limited to, methylphosphonic acid, dimethyl methylphosphate, diethyl methylphosphate, ethylphosphonic acid, n-propylphosphonic acid, n-butylphosphonic acid, 2-methylpropylphosphonic acid, t-butylphosphonic acid, 2,3-dimethylbutylphosphonic acid, octylphosphonic acid, phenylphosphonic acid, dioctyl phenylphosphonate, dimethylphosphinic acid, methylethylphosphinic acid, methylpropylphosphinic acid, diethylphosphinic acid, dioctylphosphinic acid, phenylphosphinic acid, diethylphenylphosphinic acid, diphenylphosphinic acid, bis(4-methoxyphenyl)phosphinic acid, and the like. Of these, although it is expensive, t-butylphosphonic acid is preferable in terms of high fire retardancy. The above phosphorus compounds may be used alone, or in a combination of two or more.

The thermally expandable resin composition contains 10 to 350 parts by mass of the thermally expandable graphite and 30 to 400 parts by mass of the inorganic filler, per 100 parts by mass of the binder resin.

Further, the total amount of the thermally expandable graphite and the inorganic filler is preferably in a range of 50 to 600 parts by mass, per 100 parts by mass of the binder resin.

The thermally expandable resin composition expands by heating, thereby forming a fire-resistant heat insulating layer. According to the above formulation, the thermally expandable fire-resistant material expands upon exposure to heat from a fire or the like to achieve necessary volume expansion. After expansion, the material can form residues having a predetermined heat insulating property and strength, thereby ensuring a stable fireproof performance.

When the total amount of the thermally expandable graphite and the inorganic filler in the thermally expandable resin composition is 50 parts by mass or more, per 100 parts by mass of the binder resin, the residue amount after combustion can be satisfied and a sufficient fire resistance can be ensured. When the amount is 600 parts by mass or less, the mechanical properties can be retained.

The thermally expandable resin composition may further contain a plasticizer.

The plasticizer is not particularly limited as long as it is commonly used in the production of polyvinyl chloride resin molded products. Specific examples include phthalate plasticizers such as di-2-ethylhexyl phthalate (DOP), dibutyl phthalate (DBP),
diheptyl phthalate (DHP), and diisodecyl phthalate (DIDP);
fatty acid ester plasticizers such as di-2-ethylhexyl adipate (DOA), diisobutyl adipate (DIBA), and dibutyl adipate (DBA);
epoxidized ester plasticizers such as epoxidized soybean oil;
polyester plasticizers such as adipic acid ester and adipic acid polyester;
trimellitate plasticizers such as tri-2-ethylhexyl trimellitate (TOTM) and triisononyl trimellitate (TINTM);
phosphate plasticizers such as trimethyl phosphate (TMP), triethyl phosphate (TEP), and tricresyl phosphate (TCP);
process oils, such as mineral oil; and the like.

These plasticizers may be used alone, or in a combination of two or more.

When the amount of the plasticizer to be added is small, the extrusion moldability is likely to be deteriorated. When it is large, the resulting molded product is likely to become too soft. Accordingly, the amount of the plasticizer to be added is preferably, but not limited to, within a range of 20 to 200 parts by mass, per 100 parts by mass of the binder resin.

Further, as long as the object of the present invention is not impaired, the thermally expandable resin composition used in the present invention may further include, as necessary, antioxidants such as phenols, amines, and sulfurs. The composition may also include, as necessary, additives such as metal damage prevention agents, antistatic agents, stabilizing agents, cross-linking agents, lubricants, flexibilizers, pigments, tackifier resins, and molding-assisting agents; and tackifiers such as polybutene and petroleum resin.

The thermally expandable fire-resistant material is not particularly limited insofar as it can block heat by its expansion layer upon exposure to a high temperature such as a fire, and insofar as the expansion layer ensures a certain strength. The material preferably has a coefficient of volumetric expansion of 3 to 50 times after the material is heated for 30 minutes under a condition of 50 kW/m². When the coefficient of volumetric expansion is 3 times or more, the expansion volume can sufficiently fill the burned portions of the binder resin. Further, when the coefficient of volumetric expansion is 50 times or less, the strength of the expansion layer can be maintained, thereby maintaining the fire penetration prevention effect.

### Substrate

The substrate 3 may be a flammable layer, a quasi-non-flammable layer, or a non-flammable layer. The thickness of the substrate 3 is not particularly limited, and may be, for example, 5 µm to 1 mm.

Examples of materials used for the flammable layer include cloth materials, paper materials, wood, natural resins, synthetic resins, and the like; these materials may be used alone, or in a combination of two or more.

Examples of materials used for the quasi-non-flammable layer or non-flammable layer include metals, inorganic materials, and the like. These materials may be used alone, or in a combination of two or more.

Examples of cloth materials include woven or non-woven fabric materials, such as cotton, silk, nylon, polyester, and polypropylene.

Examples of paper materials include papers obtained by dispersing fibrous materials originating from plants, such as wood, or chemical fiber in a dispersion medium, such as water, filtrating the resulting product to form a uniform layer, followed by drying.

Examples also include processed papers obtained by applying a coating composition, water repellent, and the like to a paper; corrugated boards having two flat sheets (called "liners") with a wavy layer glued in between; and the like.

Examples of wood include wood materials obtained from native wood; glued-laminated timber, laminated wood, and laminated wood boards, each containing wood materials; and the like.

Examples of natural resins include polymers, natural rubbers, and the like comprising, as a primary component, cellulose derivatives, gelatin, alginic acid salts, chitosan, pullulan, pectin, carrageenan, proteins, tannins, lignin, rosin acid, and the like.

Examples of synthetic resins include synthetic rubbers, such as isoprene rubber, butadiene rubber, 1,2-polybutadiene rubber, styrene-butadiene rubber, polychloroprene rubber, nitrile rubber, butyl rubber, ethylene-propylene rubber, chlorosulfonated polyethylene, acrylic rubber, epichlorohydrin rubber, silicone rubber, fluororubber, urethane rubber, polyisobutylene rubber, and butyl chloride rubber;
polyolefin resins, such as polypropylene resin, polyethylene resin, poly(1-)butene resin, and polypentene resin; and polystyrene resin, acrylonitrile-butadiene-styrene resin, polycarbonate resin, acrylic resin, polyamide resin, polyvinyl chloride resin, polyethylene terephthalate resin, polybutylene terephthalate resin, polyphenylene ether resin, wholly aromatic polyester resin, polyether sulfone resin, phenol resin, polyurethane resin, epoxy resin, and the like.

Examples of metals include aluminum, iron, stainless steel, tin, lead, tin-lead alloys, copper, and the like.

It is preferable to use metal foil as the metal. Examples of the metal foil include aluminum foil, iron foil, stainless steel foil, tin foil, lead foil, tin-lead-alloy foil, copper foil, and the like.

Examples of inorganic materials include glass wool, rock wool, ceramic wool, gypsum fibers, carbon fibers, stainless steel fibers, slag fibers, silica alumina fibers, alumina fibers, silica fibers, zirconia fibers, and the like. For an inorganic fiber layer, it is preferable to use an inorganic fiber cloth containing the above inorganic fibers. The inorganic fibers used for the inorganic fiber layer are preferably those on which metal foil is laminated.

As specific examples of metal foil-laminated inorganic fibers, it is more preferable to use aluminum foil-laminated glass cloth, copper foil-laminated glass cloth, or the like.

In one embodiment, the substrate is a non-woven fabric. In this case, the expandable material is well protected from fracturing etc.

Further, in one embodiment, the substrate may be embossed. In the present invention, even with the use of an embossed substrate, the presence of an intervening layer prevents the liquid components contained in the expandable material from reaching the coating surface, which can reduce color unevenness.

### Coating Layer

The coating layer 4 is provided to improve the appearance of the fire-resistant multilayer sheet 1. The thickness of the coating layer 4 is not particularly limited, and is, for example, 10 µm to 1 mm.

The coating composition constituting the coating layer 4 may be any coating composition, such as an oil-based coating composition, a lacquer, a synthetic resin coating composition, or an aqueous coating composition. The coating composition may contain coating film-forming components, such as a drying oil, a resin, and cellulose; additives, such as a leveling agent, a slipping agent, a plasticizer, a thickener, an emulsifier, a drying agent, and a defoaming agent; a solvent; and a pigment. In addition to the above, the coating composition may also contain known (function-imparting) components to impart, to the fire-resistant multilayer sheet 1, corrosion resistance, antiseptic properties, mildew resistance, pollution resistance, water resistance, disinfection properties, chemical resistance, and fire resistance (protective functions), as well as heat insulation properties, water-repellent properties, luminous properties, fluorescence properties, and toxic chemical substance adsorption properties.

### Intervening Layer

The intervening layer 5 is in direct adhesive contact with the thermally expandable material 2 and the substrate 3 to increase the peel strength between the thermally expandable material 2 and the substrate 3. The thickness of the intervening layer 5 is not particularly limited, and is, for example, 2 µm to 1 mm.

The intervening layer 5 comprises 50 mass% or more, for example, 60 mass% or more, 70 mass% or more, 80 mass% or more, 90 mass%, or 100 mass% of a thermoplastic resin, based on all of the components constituting the intervening layer. In particular, polyethylene (PE), as well as polyvinyl acetate (EVA) have a relatively low melting point. Thus, in the production of the fire-resistant multilayer sheet 1, when the substrate 3, the intervening layer 5, and the thermally expandable material 2 are heated while they are in a laminated state, the intervening layer 5 comprising the above component materials will be melted and become an adhesive layer, increasing the peel strength between the thermally expandable material 2 and the substrate 3. If, for example, the same resin is used for the resin constituting the intervening layer 5 and the resin constituting the substrate 3, the adhesion between the substrate 3 and the intervening layer 5 increases. The melting point of the intervening layer 5 is preferably 50°C or more lower than the expansion starting temperature of the expandable material, in order to allow the intervening layer 5 to adhere to the thermally expandable material 2 without expanding the thermally expandable material 2. Additionally, the melt mass-flow rate (MFR) is preferably 20 dg/min or greater (measurement in accordance with JIS-K7210) in order to increase the adhesion of the intervening layer 5 with the substrate 3 and the thermally expandable material 2 by means of an anchor effect.

The following describes the production method for a fire-resistant multilayer sheet 1.

A fire-resistant multilayer sheet 1 is obtained by laminating, in this order, a thermally expandable material 2, an intervening layer 5, and a substrate 3; heating the resulting laminate such that the intervening layer 5 is melted; allowing the thermally expandable material 2, the intervening layer 5, and the substrate 3 to adhere to each other with a press machine; and then applying a coating composition to the substrate 3 to thus form a coating layer 4.

For the thermally expandable material 2, a thermally expandable material 2 that has been molded into a sheet shape may be used, and the intervening layer 5 may be laminated on the solid thermally expandable material 2. Alternatively, a liquid thermally expandable resin composition, which is the material of the thermally expandable material 2, may be spread over a conveyor belt, and the intervening layer 5 may be laminated before the material of the thermally expandable material 2 is solidified into a sheet.

If the fire-resistant multilayer sheet 1 is a long sheet, the thermally expandable material 2, the intervening layer 5, and the substrate 3 wound on rollers may each be rolled out from the rollers, and subjected to heating and pressure-bonding with a press machine; then, a coating composition may be applied to the substrate 3 to form the coating layer 4.

The thus-obtained fire-resistant multilayer sheet 1 is cut into an appropriate size as required in accordance with the size of an adherend to which the fire-resistant multilayer sheet 1 is attached, and used by being attached to a building or an adherend that is a member constituting a building.

In this specification, the term "building" includes, but is not limited to, building materials for single-family houses, apartments, high-rise residential buildings, high-rise buildings, commercial facilities, public facilities, and the like; structures such as vessels, including passenger ships, transport vessels, and ferries; vehicles; and the like.

In this specification, examples of the "building material" include, but are not limited to, arbitrary materials used to build a building, such as structures including walls, floors, bricks, roofs, and boards; and fittings such as windows (including sliding windows, opening windows, and raising and lowering windows), *shoji* (paper sliding doors), doors, to (Japanese doors), *fusuma* (Japanese sliding screens), and *ramma* (transoms); wiring; pipes; and the like.

The fire-resistant multilayer sheet of the present invention may be used at an opening of a building material. In this specification, "an opening" of a building material refers to not only an opening of a single building material but also a space sectioned between two or more building materials, as well as a gap between two oppositely facing building materials.

The present invention is not limited to the above embodiments, and various modifications such as those shown below can be made.

The intervening layer 5 is not limited to a single layer, and may have a multilayer structure with two or more layers. The intervening layers 5 may consist of the same or different materials.

Thermally expandable material 2 and the substrate 3 may also consist of multiple thermally expandable materials 2 and multiple substrates 3, respectively.

For example, as shown in Fig. 2, the fire-resistant multilayer sheet 1 may have a structure in which the substrates 3 and the intervening layers 5 are provided on both lower and upper sides, the thermally expandable material 2 is provided between the two intervening layers 5 so that the intervening layers 5 are in contact with the thermally expandable material 2, and a coating layer 4 is provided on one or both of the substrates 3.

This structure reduces the difference in shrinkage between the upper and lower surfaces, which can possibly prevent changes in shape, such as warping, from occurring.

The following specifically describes the present invention with reference to the Examples. However, the present invention is not limited to these Examples.

### Examples

### 1. Production of Fire-Resistant Multilayer Sheet

In Examples 1 to 8, a fire-resistant multilayer sheet was produced in which substrates 3, intervening layers 5, and a thermally expandable material 2 were laminated. The structure of these fire-resistant multilayer sheets was equivalent to that shown in Fig. 2, but without a coating layer. Specifically, surface materials, each comprising a substrate 3 on whose one surface an intervening layer 5 with a thickness of 75 µm was formed through extrusion processing so as to be integrated with the substrate 3, were positioned on both upper and lower sides, and a thermally expandable material 2 was applied between the two surface materials so that the thermally expandable material 2 was in contact with the intervening layers 5. The thermally expandable material 2 was applied to form a sheet shape with a thickness of 1.5 mm. The obtained laminate was heated and cured in a curing furnace at 90°C for 15 hours to thus obtain a fire-resistant multilayer sheet 1, in which the surface materials were integrated with the thermally expandable material 2.

In Comparative Example 1, a fire-resistant multilayer sheet 101 was produced in which a thermally expandable material 102 and a substrate 103 were laminated. The structure of this fire-resistant multilayer sheet was equivalent to that shown in Fig. 3, but without the coating layer 104. As the substrate, a PET non-woven fabric was used that had been embossed in vertical and horizontal directions with diamond patterns with a depth of 30 µm at 3-mm intervals.

In Comparative Example 2, a fire-resistant multilayer sheet 101 was produced in which a thermally expandable material 102 and a substrate 103 were laminated. The structure of this fire-resistant multilayer sheet was equivalent to that shown in Fig. 4, but without the coating layer 104.

For the thermally expandable material, the thermally expandable materials of the following compositions were used.

Thermally Expandable Material 1
   Epoxy resin, E807 (produced by Mitsubishi Chemical Corporation): 60 parts by mass
   Diamine curing agent, EKFL052 (produced by Mitsubishi Chemical Corporation): 40 parts by mass
   Thermally expandable graphite, CA60N (produced by Air Water Inc.): 100 parts by mass
   Ammonium polyphosphate, AP422 (produced by Clariant): 100 parts by mass
   Calcium carbonate, BF300 (produced by Shiraishi Calcium Kaisha, Ltd.): 100 parts by mass
Thermally Expandable Material 2
   Vinyl chloride resin, TK1000 (produced by Shin-Etsu Chemical Co., Ltd.): 100 parts by mass
   Plasticizer, DIDP (Diisodecyl phthalate; produced by J-PLUS Co., Ltd.): 80 parts by mass
   Thermally expandable graphite, CA60N (produced by Air Water Inc.): 90 parts by mass
   Ammonium polyphosphate, AP422 (produced by Clariant): 90 parts by mass

For the substrate, a PET non-woven fabric ("Axtar N1080-7S" produced by Toray Industries, Inc.) or a PP non-woven fabric (Splitop SP-1017E, produced by Maeda Kosen Co., Ltd.) was used.SpriTop

For the intervening layer, an LDPE film (1050, produced by Tokyo Printing Ink Mfg. Co., Ltd.), an EVA film (2030, produced by Tokyo Printing Ink Mfg. Co., Ltd.), a polyester film (G100, produced by Tokyo Printing Ink Mfg. Co., Ltd.), a modified EVA film (D60, produced by Tokyo Printing Ink Mfg. Co., Ltd.), or an ionomer film (H1652, produced by Tokyo Printing Ink Mfg. Co., Ltd.) was used.

Table 1 shows specific structures of Examples 1 to 8 and Comparative Examples 1 and 2.

**Table 1**

| | Substrate | Intervening layer | Thermally expandable material |
|---|---|---|---|
| Ex. 1 | PET non-woven fabric | LDPE film | Thermally expandable material 1 |
| Ex. 2 | PET non-woven fabric | EVA film | Thermally expandable material 1 |
| Ex. 3 | PET non-woven fabric | Polyester film | Thermally expandable material 1 |
| Ex. 4* | PET non-woven fabric | Modified EVA film | Thermally expandable material 2 |
| Ex. 5* | PET non-woven fabric | Ionomer film | Thermally expandable material 2 |
| Ex. 6* | PET non-woven fabric | EVA film | Thermally expandable material 2 |
| Ex. 7* | PP non-woven fabric | EVA film | Thermally expandable material 2 |
| Ex. 8 | PP non-woven fabric | LDPE film | Thermally expandable material 1 |
| Comp. Ex. 1 | PET non-woven fabric | | Thermally expandable material 1 |
| Comp. Ex. 2 | PET non-woven fabric | | Thermally expandable material 1 |

| | | | |
|---|---|---|---|
| * Reference Example | | | |

### 2. Observation of Adhesion and Coating Unevenness

Next, a visual test was performed to analyze delamination of the thermally expandable material from the substrate layer in the fire-resistant multilayer sheet of each Example and Comparative Example. Additionally, a coating layer was further provided on the substrate layer using a black epoxy coating composition to observe coating unevenness. Table 2 shows the results.

Adhesion: The end portions of a sheet (1 m x 1 m) collected from the curing furnace were observed; a sheet without the formation of a non-adhesive portion with a length of 10 mm or more was evaluated as having adhesion, and a sheet with one or more non-adhesive portions was evaluated as not having adhesion.

Coating Unevenness: After the coating composition was applied to the substrate and dried for one week, it was confirmed whether exposure, on the surface of the sheet, of at least a portion of the substrate due to peeling-off of the coating composition could be visually observed, as well as whether the coating composition was liquefied without being dried. Specifically, the presence or absence of coating composition unevenness was evaluated.

Sheets with no non-adhesive portion as well as no coating composition unevenness were evaluated as "Pass," while sheets with either a non-adhesive portion or coating composition unevenness were evaluated as "Fail."

**Table 2**

| | Adhesion | Coating unevenness | Evaluation |
|---|---|---|---|
| Ex. 1 | Yes | No | Pass |
| Ex. 2 | Yes | No | Pass |
| Ex. 3 | Yes | No | Pass |
| Ex. 4* | Yes | No | Pass |
| Ex. 5* | Yes | No | Pass |
| Ex. 6* | Yes | No | Pass |
| Ex. 7* | Yes | No | Pass |
| Ex. 8 | Yes | No | Pass |
| Comp. Ex. 1 | Yes | Yes | Fail |
| Comp. Ex. 2 | No | No | Fail |

| | | | |
|---|---|---|---|
| * Reference Example | | | |

### Description of Reference Numerals

1: Fire-resistant multilayer sheet; 2: Thermally expandable material; 3: Substrate; 4: Coating layer; 5: Intervening layer

## Claims

1. A fire-resistant multilayer sheet comprising:
a thermally expandable material comprising a thermally expandable resin composition containing a binder resin, an inorganic filler and a thermally expandable graphite;
a substrate laminated with the thermally expandable material; and
an intervening layer containing a thermoplastic resin disposed between the thermally expandable material and the substrate, wherein
the thermoplastic resin includes polyethylene, polyvinyl acetate, or polyester,
the thermally expandable resin composition contains 10 to 350 parts by mass of the thermally expandable graphite and 30 to 400 parts by mass of the inorganic filler, per 100 parts by mass of the binder resin, and
the binder resin is an epoxy resin.

2. The fire-resistant multilayer sheet according to claim 1, wherein a coating layer is laminated on a surface of the substrate opposite to a surface on which the intervening layer is disposed.

3. The fire-resistant multilayer sheet according to claim 1 or 2, wherein the substrate is a non-woven fabric.

4. The fire-resistant multilayer sheet according to any one of claims 1 to 3, wherein the intervening layer is in adhesive contact with the thermally expandable material and the substrate.

5. The fire-resistant multilayer sheet according to any one of claims 1 to 4, wherein the thermoplastic resin includes polyethylene.

6. The fire-resistant multilayer sheet according to any one of claims 1 to 5, wherein the substrate is a polyester.

## Patentansprüche

1. Feuerbeständige Mehrschichtfolie, umfassend:
ein thermisch expandierbares Material, umfassend eine thermisch expandierbare Harzzusammensetzung, die ein Bindemittelharz, einen anorganischen Füllstoff und einen thermisch expandierbaren Graphit enthält;
ein Substrat, das mit dem thermisch expandierbaren Material laminiert ist; und
eine Zwischenschicht, die ein thermoplastisches Harz enthält und zwischen dem thermisch expandierbaren Material und dem Substrat angeordnet ist, wobei
das thermoplastische Harz Polyethylen, Polyvinylacetat oder Polyester enthält,
die thermisch expandierbare Harzzusammensetzung 10 bis 350 Masseteile des thermisch expandierbaren Graphits und 30 bis 400 Masseteile des anorganischen Füllstoffs pro 100 Masseteile des Bindemittelharzes enthält, und
das Bindemittelharz ein Epoxidharz ist.

2. Feuerbeständige Mehrschichtplatte nach Anspruch 1, wobei eine Überzugsschicht auf eine Oberfläche des Substrats laminiert ist, die einer Oberfläche gegenüberliegt, auf der die Zwischenschicht angeordnet ist.

3. Feuerbeständige Mehrschichtfolie nach Anspruch 1 oder 2, wobei das Substrat ein Vliesstoff ist.

4. Feuerbeständige Mehrschichtfolie nach einem der Ansprüche 1 bis 3, wobei die Zwischenschicht in Klebekontakt mit dem thermisch expandierbaren Material und dem Substrat steht.

5. Feuerbeständige Mehrschichtfolie nach einem der einem der Ansprüche 1 bis 4, wobei das thermoplastische Harz Polyethylen enthält.

6. Die feuerbeständige Mehrschichtfolie nach einem der Ansprüche 1 bis 5, wobei das Substrat ein Polyester ist.

## Revendications

1. Feuille multicouche résistante au feu comprenant :
un matériau thermiquement expansible comprenant une composition de résine thermiquement expansible contenant une résine liante, une charge inorganique et un graphite thermiquement expansible ;
un substrat stratifié avec le matériau thermiquement expansible ; et
une couche intermédiaire contenant une résine thermoplastique disposée entre le matériau thermiquement expansible et le substrat, dans laquelle
la résine thermoplastique comprend du polyéthylène, de l'acétate de polyvinyle ou du polyester,
la composition de résine thermiquement expansible contient 10 à 350 parties en masse du graphite thermiquement expansible et 30 à 400 parties en masse de la charge inorganique, pour 100 parties en masse de la résine liante, et
la résine liante est une résine époxy.

2. Feuille multicouche résistante au feu selon la revendication 1, dans laquelle une couche de revêtement est laminée sur une surface du substrat opposée à une surface sur laquelle est disposée la couche intermédiaire.

3. Feuille multicouche résistante au feu selon la revendication 1 ou 2, dans laquelle le substrat est un tissu non tissé.

4. Feuille multicouche résistante au feu selon l'une quelconque des revendications 1 à 3, dans laquelle la couche intervenante est en contact adhésif avec le matériau thermiquement expansible et le substrat.

5. Feuille multicouche résistante au feu selon l'une quelconque
l'une quelconque des revendications 1 à 4, dans laquelle la résine thermoplastique comprend du polyéthylène.

6. Feuille multicouche résistante au feu selon l'une quelconque des revendications 1 à 5, dans laquelle le substrat est un polyester.
